**Europäisches Patentamt**

**European Patent Office**

**Office européen des brevets**

(19)

(11) **EP 0 749 942 A2**

## (12) EUROPÄISCHE PATENTANMELDUNG

(43) Veröffentlichungstag:
27.12.1996 Patentblatt 1996/52

(51) Int. Cl.$^6$: **C02F 3/30**

(21) Anmeldenummer: 96108070.2

(22) Anmeldetag: 21.05.1996

(84) Benannte Vertragsstaaten:
**BE DE ES GR IT PT**

(30) Priorität: 23.05.1995 DE 29508347 U

(71) Anmelder:
• **Diering, Bernd, Dr.-Ing.**
**52223 Stolberg (DE)**
• **Diering, Andreas, Dipl.-Ing.**
**51072 Aachen (DE)**

(72) Erfinder:
• **Diering, Bernd, Dr.-Ing.**
**52223 Stolberg (DE)**
• **Diering, Andreas, Dipl.-Ing.**
**51072 Aachen (DE)**

(74) Vertreter: **König, Werner, Dipl.-Ing.**
**Habsburgerallee 23-25**
**52064 Aachen (DE)**

(54) **Anlage zur biologischen Aufbereitung von Abwasser**

(57) Die bekannten Anlagen zur biologischen Aufbereitung von Abwasser erfordern einen erheblichen Bauaufwand durch die Segmentierung in viele Einzelbecken. Jedes Becken muß außerdem mit einer eigenen Umwälzung ausgerüstet werden. Die Rückführung des nitrathaltigen Belebtschlamm-Abwasser-Gemisches sowie des Rücklaufschlamms aus dem Sedimentationsbecken erfordert aufwendige Rohranlagen mit entsprechend hohen Pumpleistungen, da lange Rohrleitungswege zu überwinden sind.

Es wird hiermit nun eine Anlage angegeben, deren Bauaufwand gegenüber den bisher bekannten Anlagen bei außerdem verbessertem Wirkungsgrad erheblich reduziert ist.

Bei dieser Anlage zur biologischen Aufbereitung von Abwasser, insbesondere kommunalem Abwasser, bei der das Abwasser nacheinander mehrere, nach speziellen Aufgabenstellungen getrennte Becken durchläuft, sind mindestens zwei ringförmige Becken (2; 3; 4) konzentrisch um ein kreisförmiges Sedimentationsbecken (1) angeordnet. Sämtliche Becken (1; 2; 3; 4) sind auf einer einzigen durchgehenden Beckensohle (5) aufgebaut und mittels Rohrleitungen (15; 19) oder Überläufen 9; 10) miteinander verbunden. Dabei kann mindestens ein ringförmiges Becken (2; 3; 4) in zwei Beckenabschnitte unterteilt sein, wobei ein Beckenabschnitt vom Abwasser an seiner Oberfläche entgegengesetzt zur Fließrichtung an der Beckensohle (5) durchflossen ist.

Fig. 1

## Beschreibung

Die Erfindung betrifft eine Anlage zur biologischen Aufbereitung von Abwasser, insbesondere kommunalem Abwasser, bei der das Abwasser nacheinander mehrere, nach speziellen Aufgabenstellungen getrennte Becken durchläuft.

Die üblichen Abwasseraufbereitungsanlagen, siehe z.B. Weitergehende Abwasserreinigung, Lehrbriefsammlung /herausgegeben von Jürgen Bever u.a., R. Oldenbourg Verlag GmbH, München, 1993, bestehen aus mehreren kaskadenartig hintereinanderliegenden, rechteckförmigen Belebtschlammbecken und nachgeordneten separaten Sedimentationsbecken, die eine Kreis- oder Rechteckform aufweisen können.

Das zu behandelnde Abwasser gelangt zunächst in eine anaerobe Zone, in der eine Eliminierung von Kohlenstoff- und Phosphorverbindungen erfolgt.

In den beiden nachgeordneten Stufen erfolgt eine weitere Elimination der Kohlenstoffverbindungen und die Elimination von Stickstoff. Die Stickstoffelimination geschieht in zwei Stufen in einer Denitrifikations- und einer Nitrifikationszone. In der Denitrifikationszone wird das Belebtschlamm-Abwasser-Gemisch unter anoxischen Bedingungen umgewälzt, d.h. es erfolgt kein Sauerstoffeintrag. Die organischen Substanzen werden von den Mikroorganismen beim Vorhandensein von Nitrat als Sauerstofflieferant zu Kohlenstoffdioxid und Wasser oxidiert. Der bei diesem Prozeß außerdem entstehende molekulare Stickstoff entweicht aus dem Wasser in die Atmosphäre.

Da in kommunalen Abwässern der Stickstoff zum überwiegenden Teil als Ammonium vorliegt, ist ein weiterer Beckenabschnitt erforderlich, in dem unter Sauerstoffeintrag eine wiederum durch Mikroorganismen bewirkte Stoffumwandlung des Ammoniums in Nitrat vorgenommen wird. Das nitrathaltige Belebtschlamm-Abwasser-Gemisch wird zur Denitrifikation in die vorgelagerte Denitrifikationszone zurückgeführt.

In einem abschließenden vierten Beckenteil wird der Belebtschlamm sedimentiert, mittels der Räumerbrücke geräumt und in die anaerobe Zone bzw. die Denitrifikationszone zurückgeleitet. Der überschüssige Schlammzuwachs (Überschußschlamm) wird aus dem System entfernt.

Da der Stoffumsatz der Mikororganismen konzentrationsabhängig ist, ist in den jeweiligen Behandlungszonen eine möglichst hohe Konzentration, d.h. eine möglichst geringe Rückvermischung, anzustreben. Die Behandlungszonen sind deshalb in jeweils mehrere Behandlungsabschnitte, d. h. mehrere kleine Becken, mit steigendem Verdünnungsgrad der zu eliminierenden Substanzen unterteilt.

Die geschilderte Bauweise erfordert einen erheblichen Bauaufwand durch die Segmentierung in viele Einzelbecken. Jedes Becken muß außerdem mit einer eigenen Umwälzung ausgerüstet werden. Die Rückführung des nitrathaltigen Belebtschlamm-Abwasser-Gemisches sowie des Rücklaufschlamms aus dem Sedimentationsbecken erfordert aufwendige Rohranlagen mit entsprechend hohen Pumpleistungen, da lange Rohrleitungswege zu überwinden sind.

Der Erfindung liegt die Aufgabe zugrunde, eine Anlage der eingangs genannten Art anzugeben, deren Bauaufwand gegenüber den bisher bekannten Anlagen bei außerdem verbessertem Wirkungsgrad erheblich reduziert ist.

Erfindungsgemäß wird die Aufgabe dadurch gelöst, daß mindestens zwei ringförmige Becken konzentrisch um ein kreisförmiges Sedimentationsbecken angeordnet und sämtliche Becken auf einer einzigen durchgehenden Beckensohle aufgebaut und mittels Rohrleitungen oder Überläufen miteinander verbunden sind.

Die Bauweise wird mit der Erfindung in entscheidendem Maße vereinfacht, da nach dem Gießen einer einzigen flachen Beckensohle ohne Trichter im wesentlichen lediglich Trennwände für die einzelnen Becken errichtet werden müssen. Für die nötigen Rohrverbindungen zwischen den einzelnen Becken sind nur kurze Längen erforderlich, da alle Becken unmittelbar bzw. nahe benachbart sind, während bei den bisher bekannten Anlagen allein die Rohrleitung zur Rezirkulation erhebliche Längen erreicht. Es lassen sich deshalb in nicht geringem Maße Baukosten sparen.

Durch die kreisförmige Ausbildung der Becken wird zur Aufrechterhaltung der Strömung sowie der Turbulenz auch deutlich weniger Energie verbraucht.

In vorteilhafter Weise kann die Anlage erfindungsgemäß so ausgeführt sein, daß mindestens ein ringförmiges Becken in zwei Beckenabschnitte unterteilt ist, wobei ein Beckenabschnitt vom Abwasser an seiner Oberfläche entgegengesetzt zur Fließrichtung an der Beckensohle durchflossen ist. Dieses Becken ist zu diesem Zweck mit radialen Trennwänden versehen.

In jedem Falle wird durch die beschriebene Bauweise in den das Sedimentationsbecken umgebenden Becken eine gerichtete Pfropfenströmung aufrechterhalten. Mit einer Pfropfenströmung wird die höchste biologische Abbauleistung gewährleistet, wie weiter unten noch näher erklärt wird.

Nach einer vorteilhaften Ausführungsform ist mindestens ein ringförmiges Becken erfindungsgemäß mit mindestens einer Belüftungsanlage ausgerüstet. Dieses Becken dient dann der Nitrifikation des Abwassers durch einen hohen Sauerstoffeintrag.

Sind mehrere Becken mit einer Belüftungsanlage ausgerüstet, kann die Nitrifikationszone, wenn nötig, erweitert werden. Als Belüftungseinrichtung kann sowohl eine Druckluftbelüftungsanlage als auch eine andere übliche Belüftungsanlage wie eine Injektorbelüftungsanlage, eine Walzenbelüftungsanlage oder eine Membranbelüftungsanlage dienen.

In vorteilhafter Weise kann die Anlage erfindungsgemäß so ausgeführt sein, daß in mindestens einem ringförmigen Becken mindestens eine Propulsionseinrichtung zur Aufrechterhaltung der Strömung angeordnet ist.

Die Belüftungseinrichtungen können an einzelnen Abschnitten konzentriert oder längs des Beckenumfanges verteilt angeordnet sein. Infolge der Überlagerung der eingebrachten Luft mit der horizontalen Strömung wird eine genügende Turbulenz erreicht. Die Belüftungseinrichtungen können in Zeiten geringer Sauerstoffzehrung ( z. B. Nachtbetrieb) abgeschaltet werden.

In vorteilhafter Weise erfolgt der Zulauf des Abwassers erfindungsgemäß über eine Einlaufrinne, die zu einem der ringförmigen Becken führt.

Die Einlaufrinne kann vorteilhaft mit einem oder mehreren Schiebern versehen sein, die jeweils den Zulauf des Abwassers in das oder die weiteren ringförmigen Becken ermöglichen. Je nach den Verfahrensbedingungen kann so an Kohlenstoffverbindungen reiches Rohabwasser in das Anaerob- und/oder das Denitrifikations- bzw. das Nitrifikationsbecken hinzugemischt werden.

Nach einer vorteilhaften Ausführungsform erfolgt die Überführung des Abwassers vom zuletzt durchlaufenen ringförmigen Becken zum Sedimentationsbecken durch eine Dükerleitung, die in einem im Sedimentationsbecken zentral angeordneten Verteilerbauwerk mündet.

Nach einer weiteren vorteilhaften Ausführungsform ist mindestens eine Pumpeinrichtung vorgesehen, mit der das Abwasser aus dem zuletzt durchlaufenen ringförmigen Becken in das oder die weiteren vorher durchlaufenen ringförmigen Becken zurückgepumpt werden kann.

In an sich bekannter und bewährter Weise sollte im Sedimentationsbecken eine am Verteilerbauwerk drehber gelagerte Räumerbrücke angeordnet sein.

In vorteilhafter Weise ist erfindungsgemäß an der Räumerbrücke eine Pumpeinrichtung für im Sedimentationsbecken abgesetzten Belebtschlamm vorgesehen, die mit einer Rohrleitung verbunden ist, die zu einem oder mehreren ringförmigen Becken führt. Der Belebtschlamm kann somit teilweise in das Anaerobbecken oder in das Denitrifikationsbecken bzw. das Nitrifikationsbecken zurückgeführt werden, wie es das Verfahren vorsieht.

Alternativ dazu kann erfindungsgemäß auch eine Pumpeinrichtung für im Sedimentationsbecken abgesetzten Belebtschlamm außerhalb der Räumerbrücke vorgesehen sein, die über eine Rohrleitung mit dem Verteilerbauwerk verbunden ist.

Die erfindungsgemäße Anlage zur biologischen Behandlung von Abwasser soll nachfolgend anhand eines Ausführungsbeispieles näher erklärt werden. In den dazugehörigen Zeichnungen zeigen

Fig. 1     eine erfindungsgemäße Anlage in Draufsicht und

Fig. 2     einen Querschnitt der erfindungsgemäßen Anlage gemäß der Line A-A in Fig. 1.

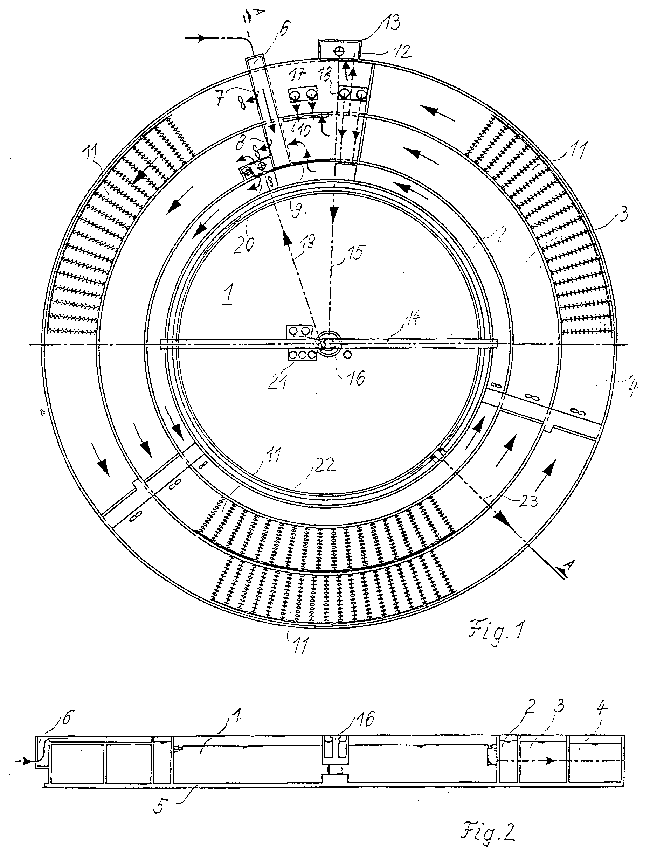

Fig. 1 zeigt den erfindungsgemäßen Aufbau einer Anlage zur biologischen Aufbereitung von Abwasser, die aus einem zentral angeordneten Sedimentationsbecken 1 und den dieses Sedimentationsbecken 1 jeweils konzentrisch umgebenden Anaerobbecken 2, Denitrifikationsbecken 3 und Nitrifikationsbecken 4 besteht. Wie Fig. 2 zeigt, sind sämtliche Becken auf einer durchgehenden ebenen Sohle 5 aufgebaut. Durch die kreisförmige, konzentrische Anordnung der nötigen Trennwände und die gegenüber der herkömmlichen Bauweise fehlende Segmentierung innerhalb der Beckenbereiche wird die geringstmögliche grundflächenspezifische Länge der Trennwände und damit die geringstmögliche Menge an Baustoffen (Beton) benötigt.

Über eine Einlaufrinne 6 wird das Abwasser in das ringfömige Anaerobbecken 2 eingeleitet. Je nach den Verfahrensbedingungen kann das Rohabwasser auch in das Denitrifikationsbecken 3 oder das Nitrifikationsbecken 4 geleitet werden. In der Einlaufrinne 6 sind hierzu entsprechende Schieber 7, 8 vorgesehen. Das Anaerobbecken 2 kann zum Zweck der Geruchsbekämpfung durch hier in der Zeichnung nicht gezeigte Kunststoffplatten abgedeckt werden. Das in das Anaerobbecken 2 eingeleitete Abwasser läuft im Anaerobbecken 2 kreisförmig um, nachdem ihm der Rücklaufschlamm aus dem Sedimentationsbecken 1 zugeführt wurde. Die zur Aufrechterhaltung der Strömung angeordneten Propulsionseinrichtungen sind hier nur schematisch angedeutet. Die Pfeile weisen auf die Umlaufrichtung in den einzelnen Becken hin.

In dem Maße wie dem Anaerobbecken 2 Rohabwasser und Rücklaufschlamm zuläuft, läuft das Abwasser-Schlamm-Gemisch über eine erste Überlaufkante 7 in das (mittlere) Denitrifikationsbecken 3 über. Im Denitrifikationsbecken 3 herrscht ein anoxisches Milieu. Hier werden das zufließende Wasser-Schlamm-Gemisch und aus der nächsten Verfahrensstufe zurückgeführtes nitrathaltiges Belebtschlamm-Abwasser-Gemisch (Rezirkulation) ohne Sauerstoffeintrag umgewälzt.

Das aus dem Denitrifikationsbecken 3 über eine Überlaufkante 10 überlaufende Abwasser-Schlamm-Gemisch gelangt nun in das Nitrifikationsbecken 4. Im Nitrifikationsbecken 4 soll die Oxidation der Stickstoffverbindungen erfolgen. Zu diesem Zweck sind entlang des Umlaufs im Nitrifikationsbecken 4 drei Belüftungseinrichtungen 11 angeordnet, die dem Abwasser-Schlamm-Gemisch den nötigen Sauerstoff zuführen. Das aus dem Nitrifikationsbecken 4 überlaufende Abwasser-Schlamm-Gemisch gelangt schließlich über eine Überlaufkante 12 in einen Schacht 13, aus dem es über eine hier nur angedeutete Dükerleitung 15 in ein Verteilerbauwerk 16 und von dort schließlich in das Sedimentationsbecken 1 fließt.

Mittels der Pumpen 17, 18 ist eine Zurückleitung in das Anaerobbecken 2 oder das Denitrifikationsbecken 3 (Rezirkulation) möglich.

Eine Erweiterung der Nitrifikationszone ist, wenn erforderlich, dadurch möglich, daß eine zusätzlich im Denitrifikationsbecken 3 angeordnete Belüftungseinrichtung 11 in Betrieb genommen wird.

Aus dem Sedimentationsbecken 1 kann der abgesetzte biologische Schlamm dann mittels an der Räumerbrücke angebrachter Pumpen 21 als Rücklaufschlamm abgesaugt werden. Der Rücklaufschlamm wird in das Anaerobbecken 2 und je nach den Verfahrensbedingungen möglicherweise auch in das Denitrifikationsbecken 2 zurückgeleitet. Hierzu dient eine wiederum nur angedeutete Rohrleitung 19, die zu einem Schacht 20 führt. Das gereinigte Abwasser wird schließlich aus dem Sedimentationsbecken 1 über eine konzentrisch verlaufende Ablaufrinne 22 und eine in der Zeichnung nur angedeutete Rohrleitung 23 nach außen abgeführt und kann dann einem Vorfluter zugeleitet werden.

Die ringförmig um das Sedimentationsbecken 1 angeordneten Anaerobbecken 2, Denitrifikationsbecken 3 und Nitrifikationsbecken 4 haben solche Abmessungen, daß in diesen Becken beim Betrieb der Anlage jederzeit eine Pfropfenströmung aufrechterhalten wird. Die biologischen Umsetzungsprozesse in Belebtschlammbecken sind konzentrationsabhängig, d.h. je höher die Konzentration der Schmutzanteile im Abwasser, desto höher ist die Abbauleistung der Mikroorganismen im Belebtschlamm. Es muß deshalb nach Möglichkeit verhindert werden, daß sich die Konzentration infolge Rückvermischung in einem Becken verringert. Dies geschieht am wirkungsvollsten bei Aufrechterhaltung einer Pfropfenströmung in den Becken. Während die üblichen kurzen Becken mit langer Fließzeit sich eher wie Becken mit totaler Vermischung verhalten, kommen die erfindungsgemäßen Becken dem Prinzip der Pfropfenströmung durch ihre große Länge und hohe Fließgeschwindigkeit sehr nahe.

Die Vorteile der Pfropfenströmung werden z. B. in der oben zitierten Literaturstelle folgendermaßen beschrieben:

"Kurze Becken mit langer Fließzeit verhalten sich eher wie totale Mischbecken. Will man der Pfropfenströmung näher kommen, so muß man die Länge groß und die Durchflußzeit kurz machen."

Die Vorgänge der Pfropfenströmung lassen sich gut mit dem Dispersionsmodell beschreiben.

Die Dispersionszahl (dimensionslos)

$$DZ = D/(v \times L) = D \times t/L^2$$

beschreibt das Mischungsverhalten des gesamten Beckens.

D (m2/s)     Dispersionskoeffizient
v (m/s)     theoretische Fließgeschwindigkeit (Q/A)
A (m2)     Beckenquerschnitt
L (m)     Beckenlänge

Die Dispersionszahl kann zwischen zwei Extremen liegen:
DZ -> oo : Totales Mischsystem
DZ -> 0 : Theoretische Pfropfenströmung

Letzteres bedeutet, wie bereits erwähnt, daß die Länge und die Fließgeschwindigkeit möglichst groß zu machen sind, um der Pfropfenströmung nahezukommen.

Nachfolgend wird ein herkömmliches Vierkaskadenbecken mit einer Durchflußmenge Q von 5.500 m3/h mit einer erfindungsgemäß aufgebauten Abwasseranlage verglichen:

Bei Abmessungen der Kaskadenbecken von
Länge L = 18 m
Breite B = 15 m
Tiefe T = 5 m
ergibt sich ein
Beckenquerschnitt A = 15 x 5 = 75 m2
und eine Fließgeschwindigkeit von
$v = Q/(A \times 3.600) = 0,02$ m/s
und damit für die Beschreibung der Durchmischung charakteristische Dispersionszahl zu

$$DZ = D/(v \times L) = 2,78 \times D.$$

Im Gegensatz dazu wird bei einem ringförmigen Becken gemäß der Erfindung bei einer Breite von 2,00 m und einer Tiefe von 4,5 m bei einer Fließgeschwindigkeit von 0,3 m/s und der mittleren abgewickelten Länge des Beckens von ca. 150 m eine Dispersionszahl von

$$DZ = 0,022 \times D$$

erreicht.

Die Vergleichsrechnung zeigt, daß die Strömungsverhältnisse beim erfindungsgemäßen Becken theoretisch der Pfropfenströmung um den Faktor 2,78/0,022 = 126 näher kommen als eine erfahrungsgemäß bereits sehr günstige Kaskadenlösung. Bei höherer mittlerer Länge (äußeres Becken) kann dieser Faktor noch höher sein.

Die Fließgeschwindigkeit sollte nicht unter 0,15 m/s abgesenkt werden, da nur bei einer genügend hohen Fließgeschwindigkeit gewährleistet ist, daß der Schlamm in Schwebe gehalten wird und sich nicht absetzen kann.

Durch die Pfropfenströmung werden auch die Eigenschaften des Belebtschlammes hinsichtlich der Selektion geeigneter Mikroorganismen positiv beeinflußt.

Es handelt bei der erfindungsgemäßen Lösung quasi um eine Aneinanderreihung von Kaskaden (Endloskaskaden), wodurch eine zusätzliche Verbesserung des Schlammindexes um 20% - 40% erreicht werden kann.

**Patentansprüche**

1. Anlage zur biologischen Aufbereitung von Abwasser, insbesondere kommunalem Abwasser, bei der das Abwasser nacheinander mehrere, nach speziellen Aufgabenstellungen getrennte Becken durchläuft, dadurch gekennzeichnet, daß mindestens zwei ringförmige Becken (2; 3; 4) konzentrisch um ein kreisförmiges Sedimentationsbecken (1) angeordnet und sämtliche Becken (1; 2; 3; 4) auf einer einzigen durchgehenden Beckensohle (5) aufgebaut und mittels Rohrleitungen (15; 19) oder Überläufen 9; 10) miteinander verbunden sind.

2. Anlage zur biologischen Aufbereitung von Abwasser nach Anspruch 1, dadurch gekennzeichnet, daß mindestens ein ringförmiges Becken (2; 3; 4) in zwei Beckenabschnitte unterteilt ist, wobei ein Beckenabschnitt vom Abwasser an seiner Oberfläche entgegengesetzt zur Fließrichtung an der Beckensohle (5) durchflossen ist.

3. Anlage zur biologischen Aufbereitung zum Abwasser nach einem der vorhergehenden Ansprüche, dadurch gekennzeichnet, daß mindestens ein ringförmiges Becken (2; 3; 4) mit mindestens einer Belüftungsanlage (11) ausgerüstet ist.

4. Anlage zur biologischen Aufbereitung von Abwasser nach einem der vorhergehenden Ansprüche, dadurch gekennzeichnet, daß in mindestens einem ringförmigen Becken (2; 3; 4) mindestens eine Propulsionseinrichtung zur Aufrechterhaltung der Strömung angeordnet ist.

5. Anlage zur biologischen Aufbereitung von Abwasser nach Anspruch 3, dadurch gekennzeichnet, daß die Belüftungsanlage (11) eine Druckluftbelüftungsanlage ist.

6. Anlage zur biologischen Aufbereitung von Abwasser nach Anspruch 3, dadurch gekennzeichnet, daß die Belüftungsanlage (11) eine Injektorbelüftungsanlage ist.

7. Anlage zur biologischen Aufbereitung von Abwasser nach Anspruch 3, dadurch gekennzeichnet, daß die Belüftungsanlage (11) eine Walzenbelüftungsanlage ist.

8. Anlage zur biologischen Aufbereitung von Abwasser nach Anspruch 5, dadurch gekennzeichnet, daß die Belüftungsanlage (11) eine Membranbelüftungsanlage ist.

9. Anlage zur biologischen Aufbereitung von Abwasser nach einem der vorhergehenden Ansprüche, dadurch gekennzeichnet, daß für den Zulauf des Abwassers eine Einlaufrinne (6) vorgesehen ist, die zu einem der ringförmigen Becken (2; 3; 4) führt.

10. Anlage zur biologischen Aufbereitung von Abwasser nach Anspruch 9, dadurch gekennzeichnet, daß die Einlaufrinne (6) mit einem oder mehreren Schiebern (7; 8) versehen ist, die jeweils den Zulauf des Abwassers in das oder die weiteren ringförmigen Becken (2; 3; 4) ermöglichen.

11. Anlage zur biologischen Aufbereitung von Abwasser nach einem der vorhergehenden Ansprüche, dadurch gekennzeichnet, daß die Überführung des Abwassers vom zuletzt durchlaufenen ringförmigen Becken (2; 3; 4) zum Sedimentationsbecken (1) durch eine Dükerleitung (15) erfolgt, die in einem im Sedimentationsbecken (1) zentral angeordneten Verteilerbauwerk (16) mündet.

12. Anlage zur biologischen Aufbereitung von Abwasser nach einem der vorhergehenden Ansprüche, dadurch gekennzeichnet, daß mindestens eine Pumpeinrichtung (17; 18) vorgesehen ist, mit der das Abwasser aus dem zuletzt durchlaufenen ringförmigen Becken (2; 3; 4) in das oder die weiteren vorher durchlaufenen ringförmigen Becken (2; 3; 4) zurückgepumpt werden kann.

13. Anlage zur biologischen Aufbereitung von Abwasser nach einem der vorhergehenden Ansprüche, dadurch gekennzeichnet, daß im Sedimentationsbecken (1) eine am Verteilerbauwerk (16) drehbar gelagerte Räumerbrücke (14) angeordnet ist.

14. Anlage zur biologischen Aufbereitung von Abwasser nach einem der vorhergehenden Ansprüche, dadurch gekennzeichnet, daß an der Räumerbrücke (14) eine Pumpeinrichtung (21) für im Sedimentationsbecken (1) abgesetzten Belebtschlamm vorgesehen ist, die mit einer Rohrleitung (19) verbunden ist, die zu einem oder mehreren ringförmigen Becken führt.

15. Anlage zur biologischen Aufbereitung von Abwasser nach einem der vorhergehenden Ansprüche , dadurch gekennzeichnet, daß eine Pumpeinrichtung für im Sedimentationsbecken (1) abgesetzten Belebtschlamm außerhalb der Räumerbrücke (14) vorgesehen ist, die über eine Rohrleitung mit dem Verteilerbauwerk verbunden ist.

Fig. 1

Fig. 2